Europäisches Patentamt

European Patent Office

Office européen des brevets

(19)

(11) Publication number: **0 265 894**

**A2**

(12) **EUROPEAN PATENT APPLICATION**

(21) Application number: **87115703.8**

(22) Date of filing: **27.10.87**

(51) Int. Cl.⁴: **G07G 1/14 , G06F 15/24**

(30) Priority: **30.10.86 JP 258984/86**
**30.10.86 JP 258985/86**
**30.10.86 JP 258986/86**

(43) Date of publication of application:
**04.05.88 Bulletin 88/18**

(84) Designated Contracting States:
**DE FR GB IT**

(71) Applicant: **MITSUBISHI DENKI KABUSHIKI KAISHA**
**2-3, Marunouchi 2-chome Chiyoda-ku Tokyo 100(JP)**

(72) Inventor: **Kitaguchi, Tomoki c/o MITSUBISHI DENKI K.K.**
**Power & Ind. Systems Center 1-2,**
**Wadasakicho 1-ch.**
**Hyogo-ku Kobe-shi Hyogo(JP)**
Inventor: **Takeno, Kouhei c/o MITSUBISHI DENKI K.K.**
**Power & Ind. Systems Center 1-2,**
**Wadasakicho 1-ch.**
**Hyogo-ku Kobe-shi Hyogo(JP)**
Inventor: **Kusano, Norimasa c/o MITSUBISHI DENKI K.K.**
**Power & Ind. Systems Center 1-2,**
**Wadasakicho 1-ch.**
**Hyogo-ku Kobe-shi Hyogo(JP)**

(74) Representative: **Eisenführ & Speiser**
**Martinistrasse 24**
**D-2800 Bremen 1(DE)**

(54) **RAM-card-acceptable commodity information terminal.**

(57) In a commodity information terminal using a RAM card, for example, an electronic cash register, the RAM card is used as main memory of a CPU thereby program in the RAM card can be executed. When loading of the RAM card if informed by the sensor, a POS terminal of the invention automatically executes the diagnosis program of the RAM card and diagnoses the RAM card interface and the RAM card, thereby wrong loading of the RAM card can be easily found and the data contents within the RAM card can be protected.

FIG. 4

## RAM-CARD-ACCEPTABLE COMMODITY INFORMATION TERMINAL

### BACKGROUND OF THE INVENTION

#### Field of the Invention

The present invention relates to a commodity information terminal such as a POS terminal which is used for the inventory control in a retainer's shop or storehouse. Description of the Prior Art

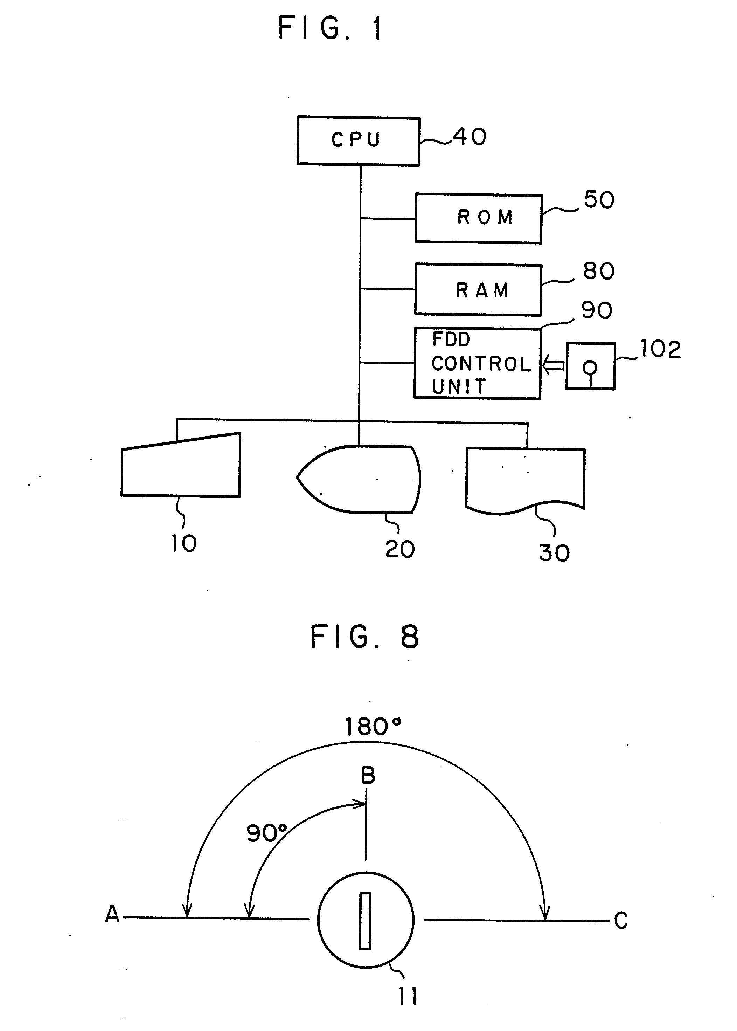

FIG. 1 is a configuration diagram of a POS terminal, wherein numeral 10 designates a keyboard which inputs the information about commodities, numeral 20 designates a display unit which displays the information about commodities inputted by the keyboard, numeral 30 designates a printer which prints out the information about commodities, numeral 40 designates a CPU which controls the above-mentioned three kinds of devices, and numeral 50 designates a ROM in which the transfer program is recorded and which transfers the programs recorded in a FDD sheet 102 onto a RAM 80 through a FDD control unit 90.

The operation of the terminal will now be explained. When the POS terminal is set in a store for the first time, since a POS terminal has no commodity registering programs recorded · in a RAM 80, the resident program in the ROM 50 is to be executed. By using the FDD control unit 90, the commodity registering programs recorded within a FDD sheet 102 are read out in sequence and transferred onto the RAM 80. As soon as all the programs recorded in the FDD sheet 102 are transferred to the RAM 80, the commodity registering programs transferred in the RAM 80 are in no time started so as to operate the keyboard 10, the display unit 20 and the printer 30, that is, the POS terminal begins to operate as a whole.

In respect of the conventional POS terminal which has such a composition as is mentioned above, one problem is that it costs too much and occupies too much space because it requires such I/O devices as the floppy disk drive units and so forth to transfer the operation program for the POS terminal to the main memory. Another problem is that it takes much time for the terminal to start the operation because it needs much time to transfer the programs from the I/O devices.

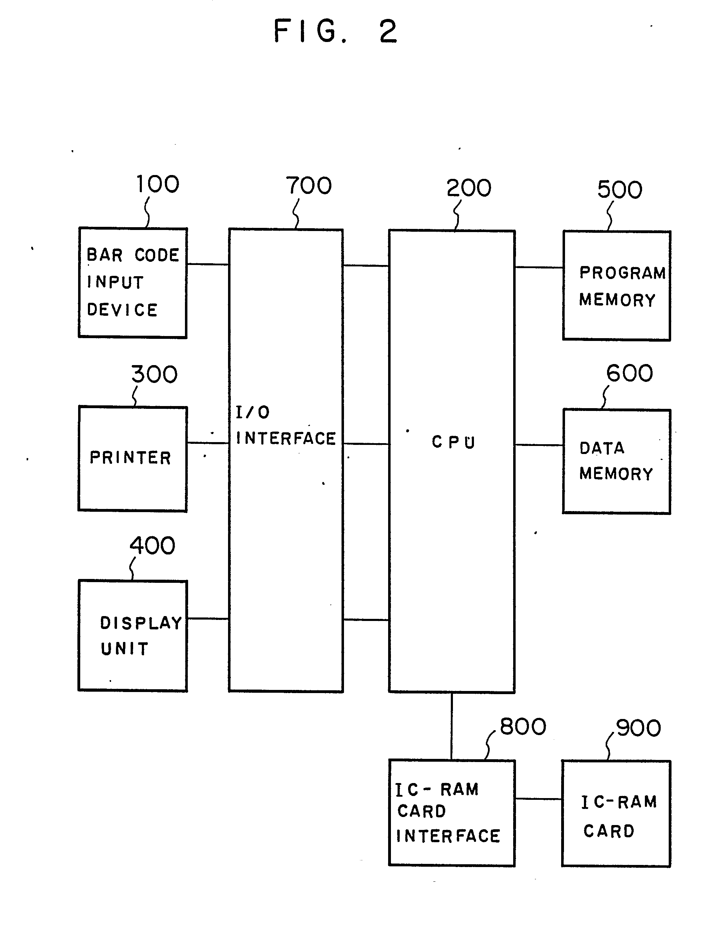

Up to now the operation program for a terminal, as is shown in a POS terminal catalogue T 7100 issued by Mitsubishi Electric Corporation, is stored in a floppy disk. With respect to a terminal which uses floppy disks, it has the following problems; that is, a floppy disk is difficult to handle (because it is big and thin), it needs much time because it needs to have the programs loaded in its main memory by receiving them from the floppy disks, and it requires FDD units which are big in size and also expensive. FIG. 2 is a configuration diagram which shows a POS terminal with IC RAM card inside it, therein numeral 100 designates a bar code input device for commodity registering, numeral 200 designates a CPU, numeral 300 designates a printer, numeral 400 designates a display unit, numeral 500 designates a program memory, numeral 600 designates a data memory, numeral 700 designates an I/O interface, numeral 800 designates an IC RAM card interface, and numeral 900 designates an IC RAM card.

The operation of the terminal contrieved first will be explained. Usually in a retailer's shop, when a cashier inputs the data (PLU card) about the commodities that a customer is going to buy through the car code input unit 100, the data are read into the CPU 200 through the I/O interface 700, and some necessary data are read out according to the procedure that is stored in the program memory 500 from the IC-RAM card 900 through the IC RAM card interface 800 and then the data are calculated.

.The results of the calculation are printed out through the I/O interface 700 by the printer 300 or indicated on the display 400 and at the same time the various kinds of accumulators inside the data memory are updated.

In the case of applying the IC-RAM card 900 as a data file as shown above, the IC-RAM card can be arbitrarily exchanged by making use of the characteristics of the IC-RAM card.

The contrievance by the present inventor is able to get over most of the problems. That is, a POS terminal with an IC-RAM card incorporated makes a cashier enable to exchange the IC-RAM card arbitrarily. However, when the IC-RAM card is not correctly inserted into the connector, it is probable that the terminal will read and write the information in the IC-RAM card wrongly, which is the new problem occurred in the system.

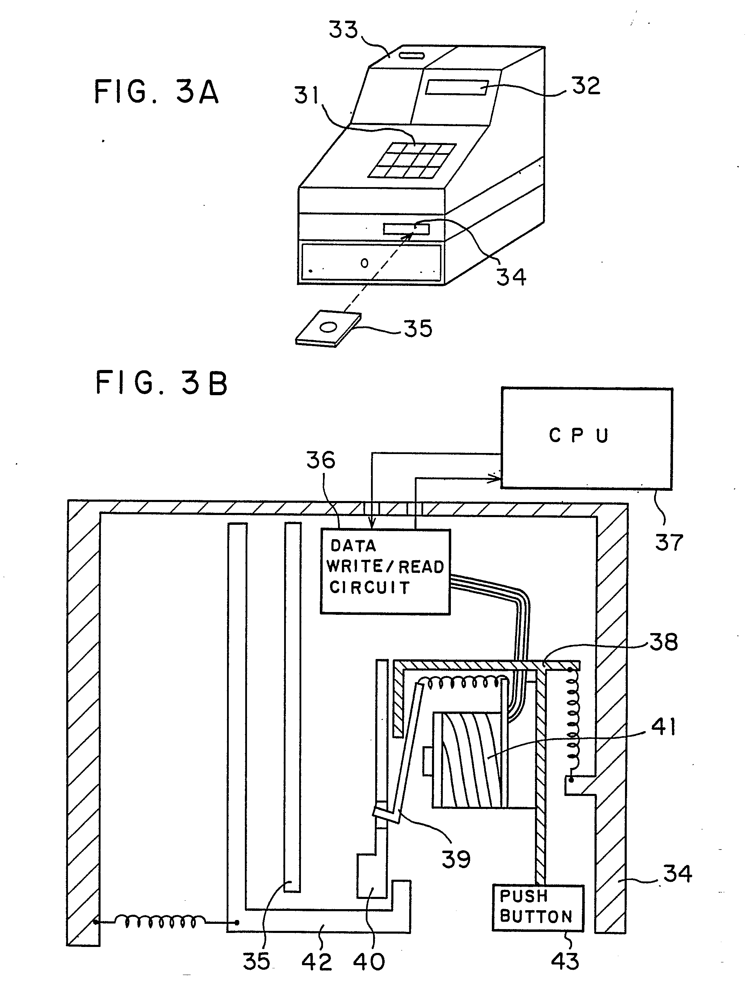

FIGS. 3A, 3B are views which show safety systems aiming at the protection of data in the conventional cash register, therein numeral 31 designates a keyboard which inputs the information about commodity trading, numeral 32 designates a display unit which indicates the information about commodity trading inputted by the keyboard 21, numeral 33 designates a printer which prints out the information about commodity trading inputted by the keyboard 21, numeral 34 designates such a data write/read unit as FDD device which records the information about commodity trading, numeral 35 designates such a recording medium as FDD sheet which is able to be put into and out of the data write/read unit 34, numeral 36 designates a data write/read controlling circuit which controls the data write/read unit 34, and numeral 37 designates a CPU. Numeral 38 designates an assembly which is mounted on the data write/read unit 34 by means of springs, numeral 39 designates lock bellows which is set so as to be fitted in the assembly 38, numeral 40 designates a lock which is so composed as to slide on the assembly 38, numeral 41 designates a solenoid which is fixed to the assembly 38 and attached on the lock bellows 39 by means of springs, numeral 42 designates a front panel which is mounted on the data write/read unit 34 by means of springs so as to be fitted in the lock 40, and numeral 43 designates a push button that is set on the assembly 38.

The operation of the conventional register will be explained. When the information about commodities and commodity trading is inputted by the key board 31, the CPU 37 analyzes and processes the information and indicates the results on the display 32 and prints them on the recording sheet of the printer, and at the same time records the information about commodity trading on the recording medium 35 in the data write/read unit 34 through the data write/read circuit 36.

While the CPU 37 stops executing write/read operation of data to the recording medium 35, current does not flow in the solenoid 41 and the lock bellows 39 remains fitted to the lock 40. In this state, when the push button 43 is pressed, the assembly 38, the solenoid 41, the lock bellows 39 and the lock 40 move as a whole in the pressing direction. As a result, the lock 40 is taken off from the front panel 42, and the front panel 42 is released by the spring force so as to make the recording medium 35 enable to be pulled out of the data write/read unit 34. The CPU 37 supplies current to the solenoid 41 through the write/read controlling circuit 36 when it write to and reads from the recording medium 35. The solenoid 41 which is supplied with current attracts and fixes the lock bellows 39. Under this state, when the push button 34 is pressed, since the lock bellows 39 is attracted and fixed by the solenoid 41, the fitting between the lock bellows 39 and the lock 40 is released so as to move the assembly 38, the solenoid 41 and the lock bellows 39 only in the pressing direction with the lock 40 left at its previous place as a result of sliding on the assembly 38. As a result, the front panel 42 is kept in fitting to the lock 40 and remains in the closed state thereby the recording medium 35 is continued not capable of being taken to outside. After the write/read operation to the recording medium is finished and the current supply to the solenoid 41 ceases, if the push button 43 is pressed, the fitting between the front panel 42 and the lock 40 is, eliminated thereby the front panel is released and the recording medium 35 can be taken out of the data write/read unit 34.

The conventional data protection safety system for the recording medium ·is composed of both mechanical parts and electric circuits, so, as its result, the system composition necessarily becomes complicated and it is inevitable to continue to supply power while the data protection and safety system is operated, and still during the operation of the data protection and safety system an operator is unable to exchange the recording medium, which causes such problems as the worsing of operability.

## SUMMARY OF THE INVENTION

An object of the present invention is to dissolve the above-mentioned problems, more particularly, to provide a small and cheap register which can execute programs without using I/O devices such as floppy disks and so forth as well as to reduce the register rise time.

Another object of the invention is to provide a POS terminal with RAM card incorporated which can detect automatically whether an IC RAM card is inserted or not so as to prevent the use of the bad card in advance by diagnosis of the RAM card and also find easily the wrong setting of the RAM card.

A further object of the invention is to make the data write/read unit smaller and to build the write/read safety system to the recording medium without supplying power and to make smaller the commodity information register including cash register and also to improve the operability so that an operator is able to exchange the RAM card without considering the recording state of the recording medium.

Yet another object of the invention is to cut off the power supply to the RAM card and make the interface circuit high impedance at least a part between the CPU and the RAM card so as to make the RAM card insensitive before it is to be pulled out, namely, insensitive to the transient bad conditions which happen when the RAM card is to be pulled out.

A still further object of the invention is to make the CPU able to read and write the RAM card after the protecting cover comes back to the mounting position which is set in advance so as to make the situation in which the RAM card can be used after going through the transient state, that is, making the situation where the data already stored in the RAM card cannot be destroyed regardless of how the RAM card is inserted or operated.

An additional object of the invention is to have the function of neglecting the data input from the input means while the protection cover of the invention is left open so as to protect from deletion of the information about commodities and commodity trading, inputted by the input means when the RAM card is removed.

The POS terminal according to the invention is one that executes the program previously recorded in the RAM card by connecting the card to the commodity information register so as to do the commodity registering job as a commodity information register.

The POS terminal according to the invention is the RAM-card-acceptable commodity information terminal which has a sensor detecting whether the cover of the RAM card is correctly closed or not so as to detect the inserting timing of the RAM card and which makes use of the RAM card as data file or program file and automatically diagnoses whether the RAM card is correctly inserted or not, by detecting automatically the inserted time of the RAM card.

The data write/read safety system according to the invention is one which uses as recording medium the compact card type medium made of a memory chip and which has the protecting cover to protect and store the data recording medium incorporated so as to protect the data in the RAM card as the recording medium by detecting the change of the setting state of the protection cover.

## BRIEF DESCRIPTION OF THE DRAWINGS

FIG. 1 is a block diagram illustrating a circuit constitution of a commodity information terminal in the prior art;

FIG. 2 is a block diagram of a POS terminal in the prior art improved by the present inventor;

FIGS. 3A and 3B are a perspective view and a sectional view illustrating a data protection and safety system of a recording medium in a commodity information terminal in the prior art;

FIG. 4 is a block diagram illustrating a - schematic circuit constitution of a commodity information terminal as an embodiment of the invention;

FIG. 5 is a block diagram illustrating a detailed circuit constitution of an IC-RAM card control unit;

FIG. 6 is a flow chart illustrating the operation flow of program in a ROM;

FIG. 7A is a perspective view of a POS terminal showing the appearance;

FIG. 7B is a perspective view of a card cover;

FIG. 8 is an operation explaining diagram illustrating manner of key operation;

FIG. 9 is a block diagram illustrating a circuit constitution of another embodiment of the invention;

FIG. 10 is a data processing flow chart of the circuit in FIG. 9;

FIG. 11 is an appearance view of the POS terminal in FIG. 9;

FIG. 12 is an inside view of the terminal in FIG. 11;

FIG. 13A is a block diagram illustrating constitution of a commodity information register as an embodiment of the invention;

FIG. 13B is an appearance view of the register in FIG. 13A;

FIGS. 14A and 14B are sectional views illustrating an IC-RAM card data protection and safety system as an embodiment of the invention;

FIGS. 14C - 14F are flow charts illustrating examples of the operation flow of the invention in various states respectively; and

FIG. 15 is a diagram illustrating a timing example in the case that the protection cover is removed while data is written on the IC-RAM card of the invention.

## PREFERRED EMBODIMENTS OF THE INVENTION

Embodiments of the present invention will now be described referring to the accompanying drawings.

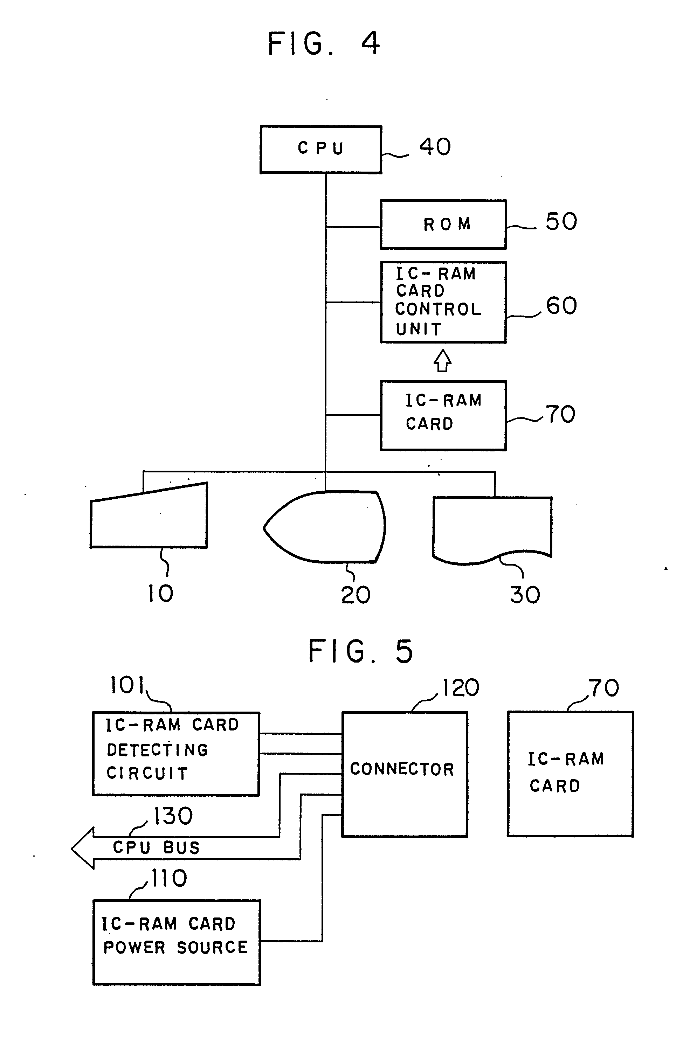

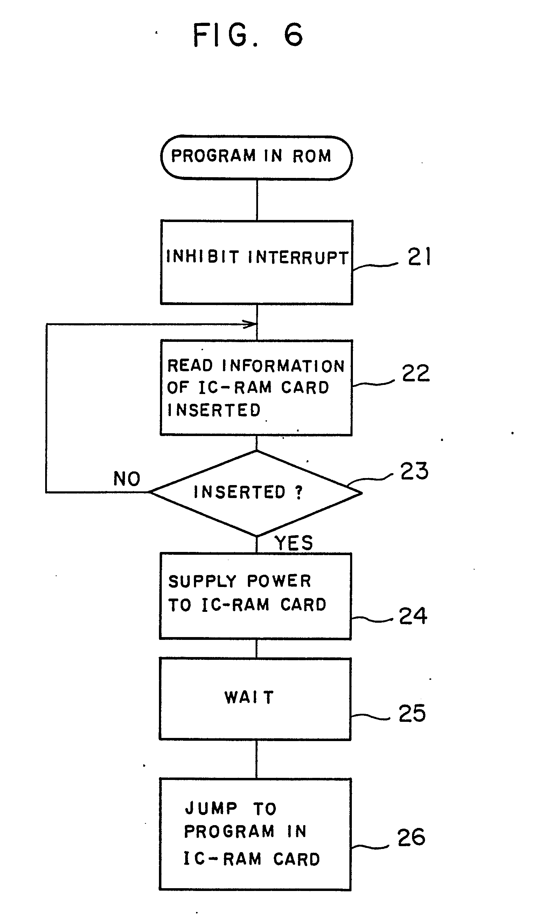

FIG. 4 shows a constitution of a POS terminal, wherein numeral 10 designates a keyboard which inputs the commodity information, numeral 20 designates a display unit which indicates the commodity information inputted by the keyboard 10, numeral 30 designates a printer which prints out the commodity information, numeral 40 designates a CPU which controls the above-mentioned three devices, and numeral 60 designates an IC-RAM card control unit which assembles and controls an IC-RAM card and to which an IC-RAM card 70 recording programs is connected. Numeral 50 designates a ROM on which is recorded the program to start that within the IC-RAM card. FIG. 5 is a configuration diagram of an IC-RAM card control unit, wherein numeral 70 designates an IC-RAM card which is connected to a connector 120. Numeral 101 designates an IC-RAM card detecting circuit which discriminates whether the IC-RAM card is connected or not, numeral 110 designates an IC-RAM card power source control circuit which controls the power supply to the IC-RAM card, and the IC-RAM card 70 is connected to a CPU bus 130. FIG. 6 is a flow chart which shows the procedure of processing the program recorded in the ROM 50.

When the power for the POS terminal is on, the program recorded in the ROM is started. The procedure of processing the program in the ROM will be explained referring to the flow chart in FIG. 6. When the program is started interruption from the printer and so forth is all forbidden (step 21), and the information about the loading of the IC-RAM card 70 is read from the IC-RAM card loading detecting circuit 101 (step 22). If the IC-RAM card 70 is not inserted, the information about the loading of the IC-RAM card is read again and the processing is continued until the IC-RAM card 70 is inserted. When the insertion of the IC-RAM card 70 is detected, the power input command is issued to the IC-RAM card power control circuit 110 (step 24) so that the IC-RAM card is at the usable state. After the power for the IC-RAM card is on and a given period of waiting time passes (step 25), if the memory of the IC-RAM card 70 becomes accessible normally, the program jumps to the program execution starting address in the IC-RAM card 70 (step 26) and the program in the IC-RAM card is started. And then the programs in the IC-RAM card 70 enable the POS terminal to execute the sale register job by means of the display 20, the keyboard 10, the printer 30 and so forth.

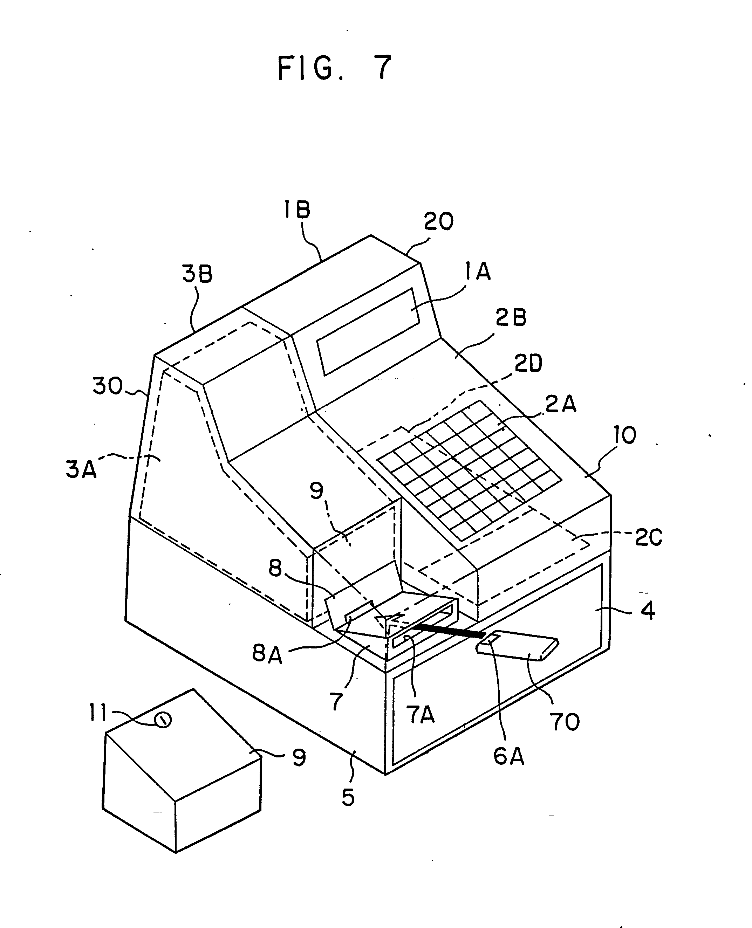

FIG. 7 is an appearance view of a POS terminal, wherein numeral 20 designates a display which indicates the results of, for example, commodity prices inputted or messages to an operator when the operator operates the keys (hereinafter described), and which has a display part 1A and a display cover 1B covering around the display part 1A. Numeral 10 designates a keyboard which inputs the sale data and customer's inquiry data in the commodity sale register job, and which has keys 2A used for the input and a keyboard cover 2B covering around the keys 2A. Numeral 30 designates a printer which prints and outputs the results of processing of a program storing ROM 2C and a CPU 40 installed inside the keyboard cover 2B onto a sheet and a journal (not shown), and which has a main frame 3A and a printer cover 3B covering the main frame 3A. Numeral 4 designates a drawer which stores cash and is opened or closed by the operation of the ROM 50 and the CPU 40 operated by the keys 2A of the keyboard 10. The drawer 4 is inserted removably in a box-shaped base on which the covers 1B, 2B, 3B are mounted. Numeral 5 depicts a base of the register. Numeral 70 designates an IC-RAM card which is as small as a credit card in size and has the memory capacity of 128 K bytes or 512 K bytes and whose memory is stored by a battery, and which has a connector 6A at the top end. Numeral 7 designates a card inserting member which has a card inserting slit 7A for inserting the IC-RAM card 70 and which is set at the place surrounded by the keyboard cover 2B and the printer cover 3B. The card inserting slit 7A and is opened at the front side (front side of the terminal) of the card inserting member 7 and inclined slightly downward towards the rear side of the inserting member 7 and is opened also at the rear side of the inserting member 7. Numeral 8 designates an IC-RAM card control substrate which serves as I/O interface of the IC-RAM card 70 and which is attached on the base 5 as extending upward and downward a little slantly and is connected to the CPU 2D. Numeral 8A designates a connector of the IC-RAM card control substrate 8, and when the IC-RAM card 70 is inserted in the card inserting slit 7A the connector 8A is connected to the connector 6A of the IC-RAM card 70 and relays the information from and to the IC-RAM card 70. Besides the IC-RAM card any kind of card will be allowed to be in place of the card 70; such card which is writable as a photo card, a magnetic card and so on will do. The connecting way of the connectors 6A, 8A is not limited to only mechanical contact but optical or magnetical contact or some others may be applied; the types of connecting way matters little if only it will be able to send or receive the information signals. Numeral 9 designates a card cover which is attached on the base 5 removably as locating in the space above the base 5 surrounded by the keyboard cover 2B and the printer cover 3B. The card cover 9 covers the card inserting member 7 and the IC-RAM card control substrate 8 so that the IC-RAM card 70 inserted in the card inserting slit 7A cannot be pulled off from outside under such covering condition by the cover 9. The card cover 9 is shaped as shown in the drawing, and each surface is of such shape and size to be flush with each of respective surfaces of the keyboard cover 2B, the printer cover 3B and the box-shaped base 5 in the vicinity. Numeral 11 designates a lock key which controls the closing and opening of the printer cover 3B and the card cover 9 and is operated at two stages by different keys (not shown). That is, as shown in FIG. 5, one key can operate at the range A ↔ B (90°), and the other at the range A ↔ B (180°). If the lock key 11 is turned counterclockwise to B → A through 90 degrees, only the printer cover 3B is removed from upper side of the box-shaped base 5. If the lock key 11 is turned clockwise to A → C through 180 degrees or clockwise to B → C through 90 degrees, the card cover 9 is removed from upper side of the box-shaped base 5 and the printer cover 3B is removed from the box-shaped base 5. In detecting the loading of the IC card 70, various kinds of detection methods generally known may be used; that is, optical, mechanical or magnetical sensor may be used at the card inserting member 7, and further there is a way to check the I/O bus signals of the IC-RAM card 70 on the program.

Although the check of the loading of the IC-RAM card and the control of the power source are executed by the program in the ROM in the above embodiment, the control can be all executed by hardware and the program in the ROM becomes unnecessary in this case. Of course, the POS terminal can be used not only for the commodity dealing but also for the inventory control in the warehouse.

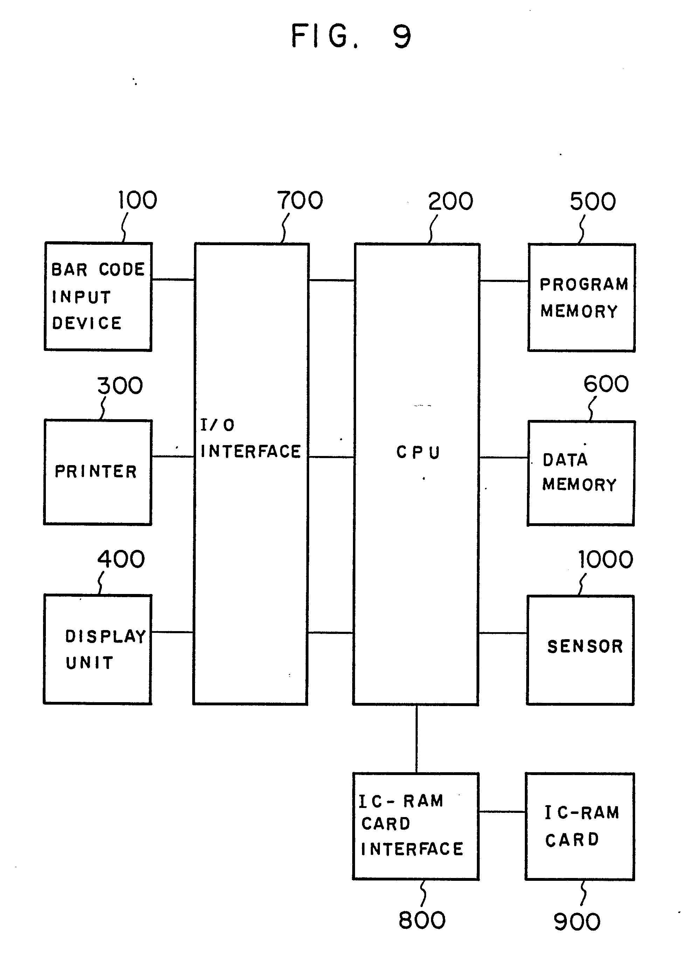

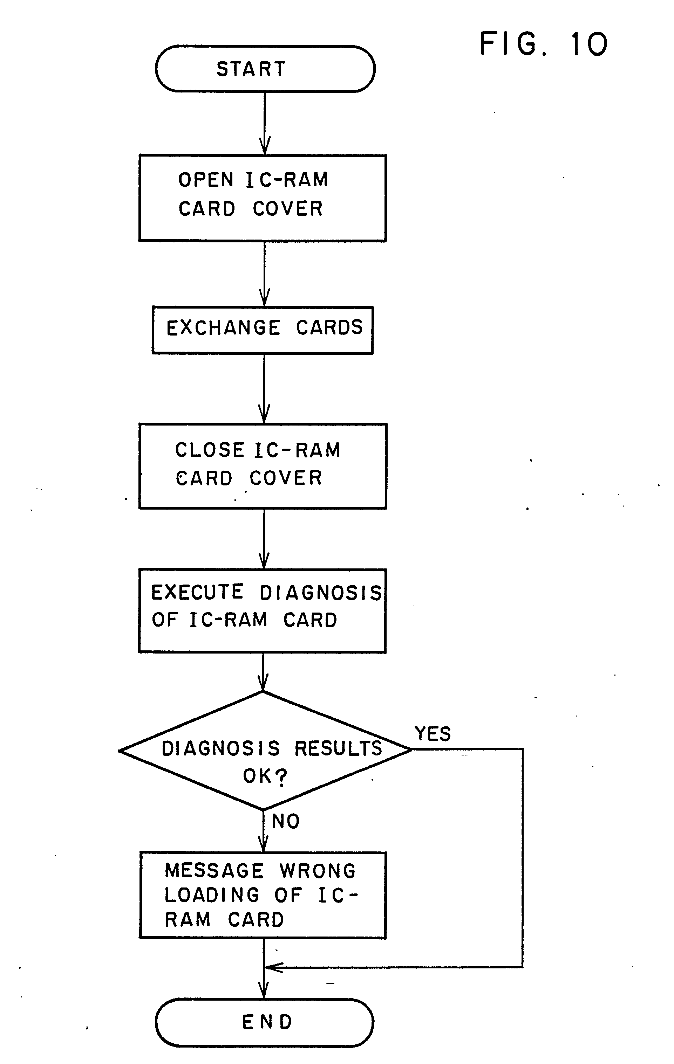

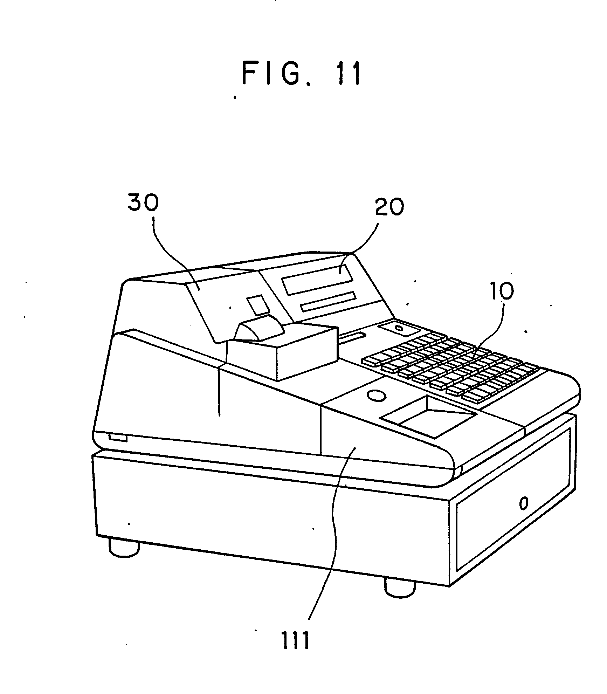

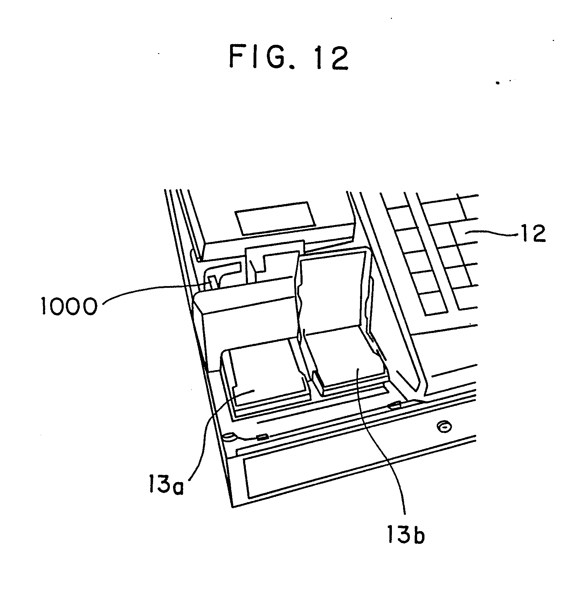

FIG. 9 is a block configuration diagram of a POS terminal in another embodiment, and FIG. 10 is a processing flow chart of the program. FIG. 11 is an appearance view of a POS terminal, and FIG. 12 is a view illustrating the state that the IC-RAM card cover is opened.

In FIG. 9, numeral 100 designates a bar code input unit which registers commodities, numeral 200 designates a CPU, numeral 300 designates a printer, numeral 400 designates a display, numeral 500 designates a program memory, numeral 600 designates a data memory, numeral 700 designates an I/O interface, numeral 800 designates an IC-RAM card interface, numeral 900 designates an IC-RAM card, and numeral 1000 designates a sensor which detects whether the cover of the IC-RAM card is closed or not.

In FIG. 11, numeral 20 designates a display, numeral 30 designates a printer, numeral 111 designates an IC-RAM card cover, and numeral 10 designates a keyboard. In FIG. 12, numeral 1000 designates a cover opening sensor, and numerals 13a, 13b designate two card inserting members into which IC-RAM cards 900 are inserted and for which two cards are available at one time (e.g., one of the two cards stores programs and the other stores the commodity information command).

The operation will now be described. When an operator exchanges an IC-RAM card, the cover of the IC-RAM card must be opened. The opening of the IC-RAM card cover is detected by the cover sensor 1000, and the CPU 200 is at waiting state. When the operator closes the IC-RAM card cover after finishing exchange of the IC-RAM card 900, the closing is detected by the cover sensor 1000 and the information is sent to the CPU 200. From its result, according to the procedure stored in the program memory 500, the diagnosis on the IC-RAM card interface 800 and the IC-RAM card 900 is automatically executed and all the bits of the data bus and address bus of the IC-RAM card are checked about whether they function normally or not, with the result that if the IC-RAM card is wrongly loaded, it can be found immediately. The processing flow chart is shown in FIG. 10.

Although the opening or closing of the IC-RAM card is detected optically in the above embodiment, another may be applied if the loading of the IC-RAM card can be detected (e.g., electrostatic capacity method and so on), and besides IC, different kinds of means which apply other principles such as light, magnetism and the like may be used with similar effects to the above.

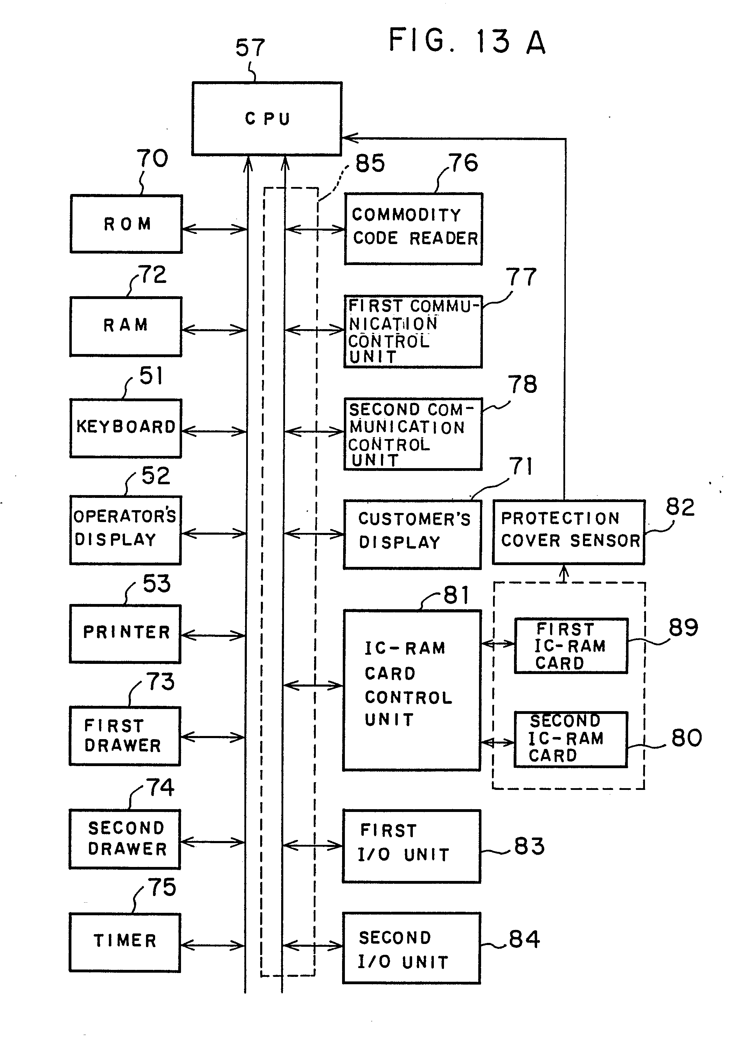

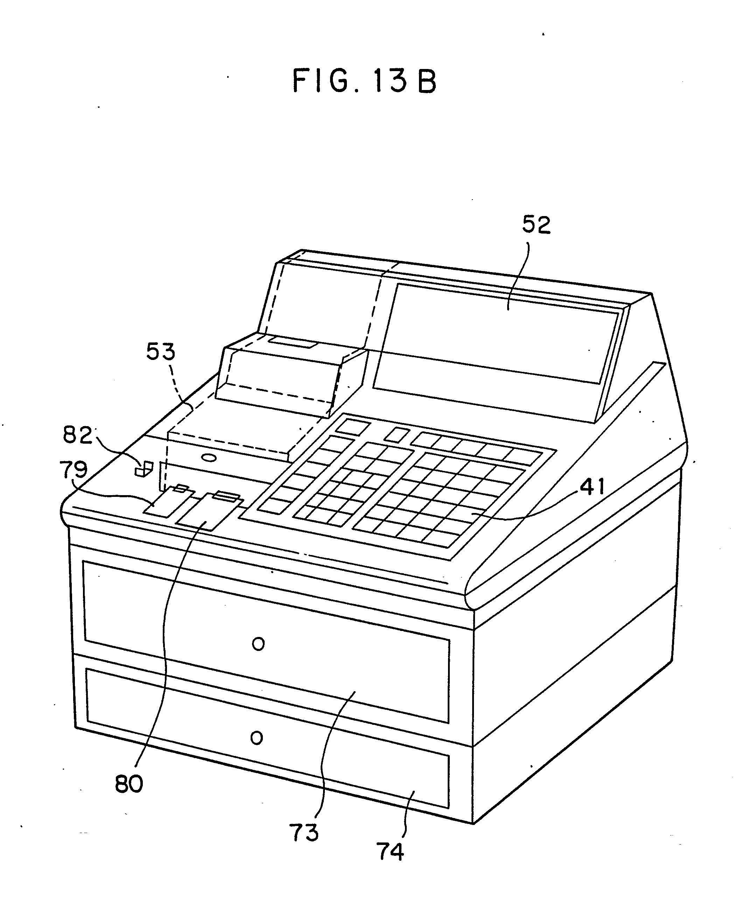

Another embodiment will be described referring to FIGS. 13 - 15. Outline of a commodity information terminal will be first described according to the figures. In FIGS. 13A, 13B, the commodity sale information about price, commodity code, for example, inputted by a keyboard 51 is calculated and sorted in a CPU 57, and its results are indicated on an operator's display 52 and a customer's display 71 and printed out by a printer 53. The statistical data of the trading time, the sold commodity code, sold amount and a dealer's name are accumulated in an accumulator in the RAM 72. The calculation and sorting are executed in the CPU 57 which reads the program written in the ROM 70. When the registration of commodities is finished, a drawer 73 is opened in accordance with the control of the CPU 57. When the plural operators use the commodity information terminal by turns, a second drawer 74 is connected so as to manage sales cash by each operator. A timer 75 the time information, for example, year, month, day, hour, minute and the like, to the CPU 57. Among the commodity codes, some of them are symbolized into bar codes, so in this case the commodity codes are not read by manual input from the keyboard but automatically read and inputted by a commodity code reader 76. When communication between the host computer and the terminal is needed, the CPU 57 executes it by way of a communication control unit 77. For example, when the statistical information of the accumulator in the commodity information register is sent to the host computer, the CPU 57 reads the content of the accumulator and gives the transmission data to the communication control unit 77. The communication control unit 77 sends the data to the host computer, and informs the CPU 57 of the result regarding whether it is finished or not. When the communication between other communication instruments is needed besides that between the host computer and the terminal, it is executed by way of a second communication control unit 78. The two communication control units 77, 78 enables the communication between the plural number of other information devices simultaneously. IC-RAM cards 79, 80 (FIG. 13B) are readable memory cards which have the connector removably inserted into an IC-RAM card control unit 81. The commodity information inputted from the keyboard 51 and from the commodity code reader 76 of the commodity trading information inputted or outputted from the communication control units 77, 78 is read to the IC-RAM cards 79, 80 through the IC-RAM card control unit 81. The IC-RAM cards 79, 80, which are pulled off from the IC-RAM card control unit 81 and connected to the IC-RAM card controller of the host computer and other information devices, can send the commodity information in the IC-RAM card without using information instruments that need some cables for the transmission of the data. When an operator has to touch the IC-RAM cards 79, 80 with the intention of exchange, the protection cover covering the IC-RAM cards 79, 80 is removed. The removal of the cover is detected by a protection cover sensor 82 and informed to the CPU 57. Some kinds of commodities require the terminal to be connected to a balance to weigh so as to input the weight information, or to a magnetic card reader that can read a credit card and so on, and these instruments perform the information input by way of I/O control units 83, 84.

Such instruments as the commodity code reader 76, the communication control units 77, 78, the customer's display 71, the IC-RAM card control unit 81, and the I/O control units 83, 84 are optional. Namely, these are constituted in units so as to be fitting with the main commodity information terminal, and each of units is removably connected to the option unit connecting substrate 35 by way of connector.

The IC-RAM card control unit 81 can load the plural number of IC-RAM cards 79, 80 at one time, and the these plural IC-RAM cards can be applied to other purposes. For example, the IC-RAM card 79 may record the statistical information about the commodity trading, and the IC-RAM card 80 may store the information about commodities such as unit price and name.

Embodiment 1

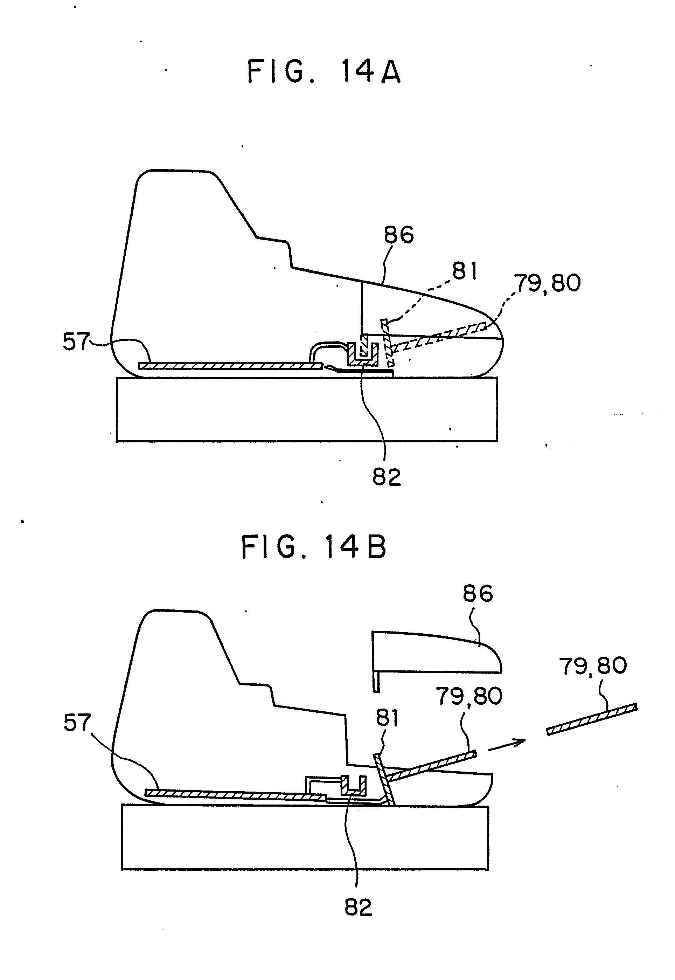

In FIGS. 14A, 14B, numeral 57 designates a CPU, numeral 86 designates a protection cover, numeral 82 designates a sensor (photo, ultrasonic, piezo-electric element may be utilized), numerals 79, 80 designate IC-RAM cards, and numeral 81 designates an IC-RAM control substrate which has a connector that can removably load the IC-RAM card, and which has interface function of the CPU and the IC-RAM card.

In this embodiment, the light reception and emission element may be used as a sensor.

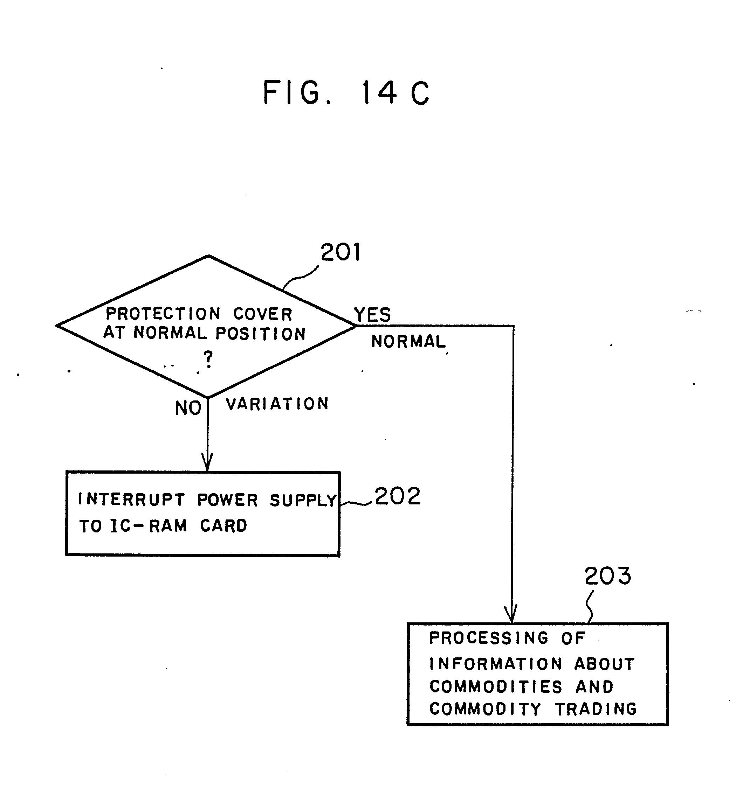

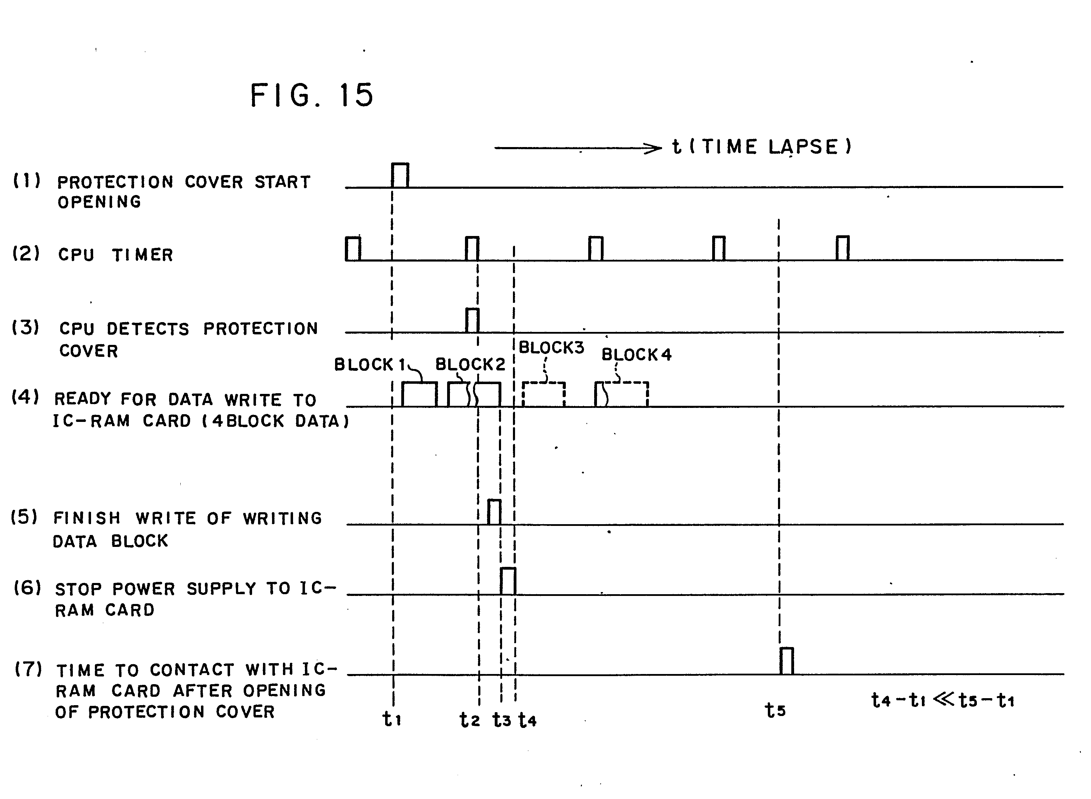

A protection cover sensor 82 comprises a light emission portion and a light reception portion, and the protection cover 86 intercepts the light path lying between the light emission portion and the light reception portion when the protection cover 86 is installed at a predetermined position (hereinafter referred to as "normal position"). When the protection cover 86 intersects the light path lying between the light emission portion and the light reception portion, the CPU 57 regards the protection cover 86 as being at the normal position, with the result that the power source is supplied to the IC-RAM card control substrate 81 and the IC-RAM cards 79, 80, and the CPU 57 reads or writes the information about commodity trading from or to the IC-RAM cards 79, 80 by means of the IC-RAM card control substrate 81. As shown in FIG. 14B, when the protection cover 86 is removed, the light path lying between the light reception portion and the light emission portion of the protection cover sensor 82 is opened, and the CPU 57 detects that the IC-RAM cards 79, 80 are in the removable state. With the time information (about tens m/sec) that comes from the timer 75 at regular interval, the CPU 57 is detecting at the constant interval whether the protection cover 86 is at the normal position or not. This detection is continued even while the IC-RAM card control unit 81 executes writing of the data to the IC-RAM cards 79, 80. When the CPU 57 detects the deviation of the protection cover 86 from normal position, the power supply line to the IC/RAM cards 79, 80 is interrupted in the IC-RAM card control unit 81 thereby the power supply to the IC-RAM cards 79, 80 is stopped. The flow chart of the above operation is shown in FIG. 14C. When the data is written to the IC-RAM card, the data is divided into several blocks so as to write by the unit, and while the data is written to the IC-RAM cards 79, 80, if the change of the position of the protection cover 86 is detected, the process of writing the unit block is finished and then the power supply to the IC-RAM cards 79, 80 is immediately stopped. The above-mentioned timing is shown in FIG. 15.

The period from detecting the change of the position of the protection cover 86 until stopping the power supply to the IC-RAM cards 79, 80 is much shorter than the period of time for pulling out the IC-RAM cards 79, 80 after opening the protection cover 86, so whenever the protection cover 86 is removed, the power supply to the IC-RAM cards 79, 80 is stopped by the time when the IC-RAM cards 79, 80 are pulled out, and since the electric transient state never occurs between the IC-RAM cards 79, 80 and the IC-RAM card control substrate 81, in whatever state and procedure the IC-RAM cards 79, 80 may be pulled out, the data in the IC-RAM cards 79, 80 can never be destroyed.

## Embodiment 2

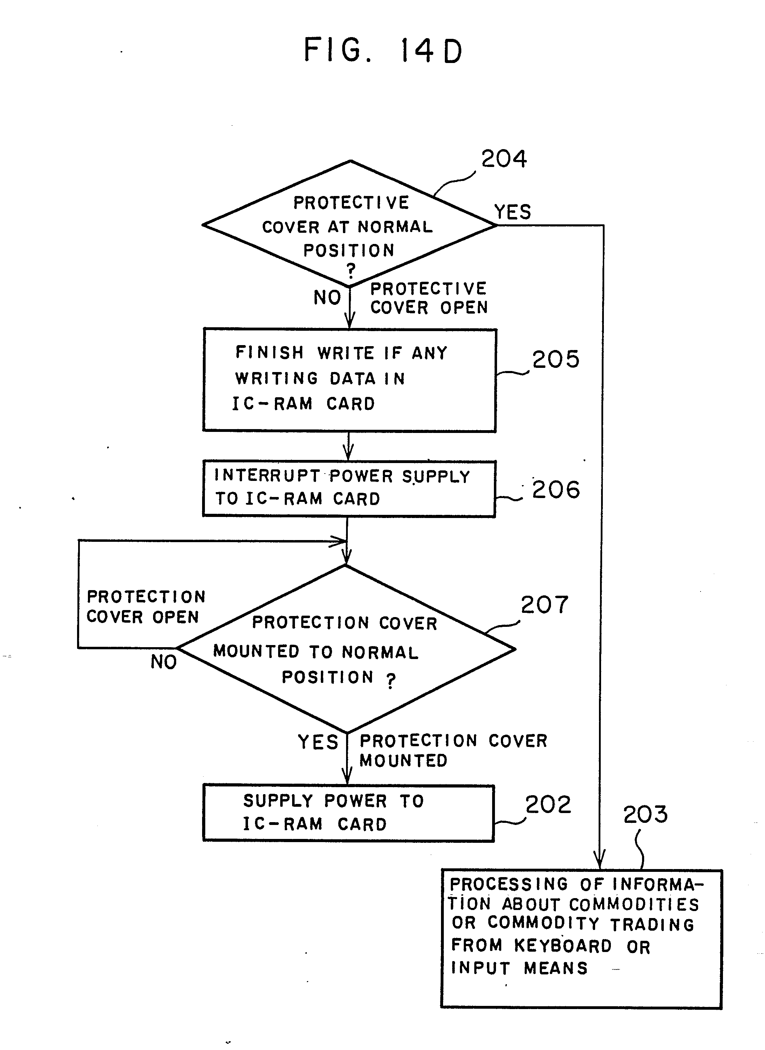

Only differences from embodiment 1 will be described. Being continued from the state of embodiment 1, when the protection cover is installed at the normal position where the protection cover is extended over the IC-RAM cards, the information that the protection cover is set in the normal position is sent through the protection cover sensor to the CPU, which supplies the power to the IC-RAM cards through the IC-RAM card control substrate and at the same time makes it possible that the IC-RAM cards read and write the data. The operation flow chart is shown in FIG. 14D. Other conditions are the same as embodiment 1.

## Embodiment 3

Only differences from embodiment 2 will be described. Being continued from the state of embodiment 2, when the power supply to the IC-RAM cards is stopped, the CPU detects the protection cover through the protection cover sensor until it returns back to the normal position. During this time, the input of the information about commodities and commodity sales from the keyboard or the input means shall be ignored.

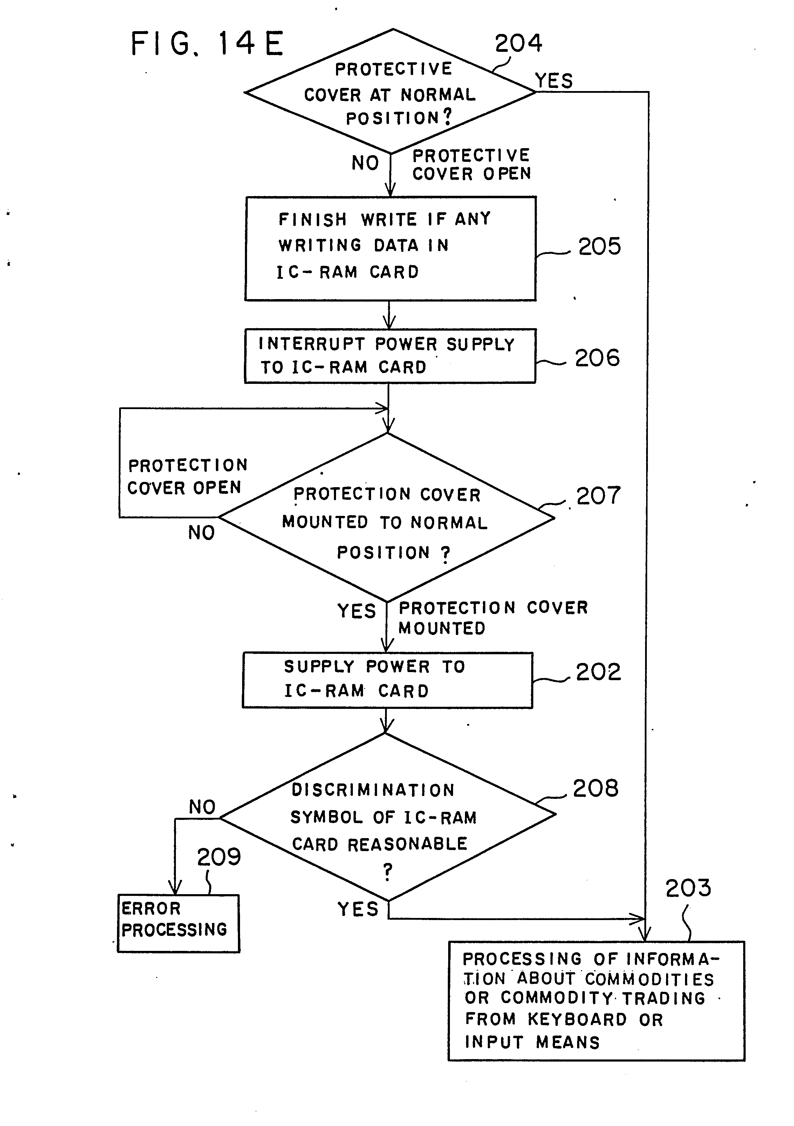

When the CPU detects the protection cover attached at the normal position, the CPU supplies the power to the IC-RAM cards through the IC-RAM card control substrate so as to confirm the discrimination marks previously written in the IC-RAM cards. After the discrimination marks confirm that the corresponding IC-RAM cards are suitable for the processing of the information about commodities and commodity trading, the CPU processes the information about commodities and commodity trading inputted from the keyboard or the input means. The operation flow chart is shown in FIG. 14E. Other conditions are the same as embodiment 2.

## Embodiment 4

Only differences from embodiment 2 will be described. Being continued from the state of embodiment 2, when the power supply to the IC-RAM cards is stopped, the CPU detects the protection cover through the protection cover sensor until it returns back to the normal position. During this time, the input of the information about commodities and commodity sales inputted from the keyboard or the input means is ignored, and then an operator is informed of the ignorance of the input of the information through such means as the indicated messages on a display, the printed messages or the sound messages from a speaker.

When the CPU detects the protection cover attached at the normal position, the CPU supplies the power to the IC-RAM cards through the IC-RAM card control substrate so as to confirm the discrimination marks previously written in the IC-RAM cards. After the discrimination marks confirm that the corresponding IC-RAM cards are suitable for the processing of the information about commodities and commodity trading, the CPU informs an operator of that the information about commodities and commodity trading is able to be processed by the input means through such means as the indicated messages on a display, the printed messages or the sound messages from a speaker.

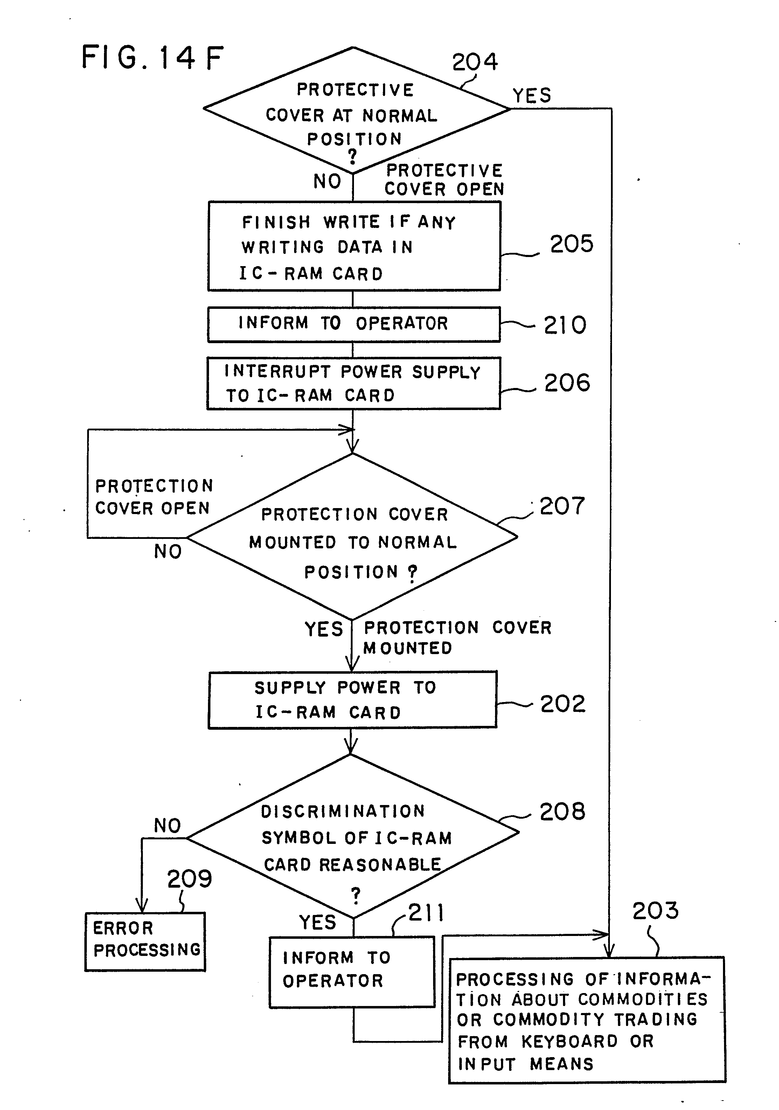

The CPU processes the information about commodities and commodity trading from the keyboard or the input means after it executes the notification to the operator. The operation flow chart is shown in FIG. 14F. Other conditions are the same as embodiment 2.

In the present invention as above described, the RAM card which is removable is used as the main memory of the CPU, thereby the program of the commodity information terminal to execute the commodity register job is previously recorded in the RAM card, and the program is started and the commodity register job can be carried out only by connecting the RAM card to the commodity information terminal. Consequently, the program can be executed without using the I/O devices such as the floppy disk, and the small and cheap commodity information register is provided, and further the rise time of the register can be reduced.

According to the invention, since the loading timing of the IC-RAM card is automatically detected and the diagnosis of the IC-RAM card can be executed automatically, the system is prevented from the trouble caused by the wrong loading of the IC-RAM card.

Still according to the invention, since the data protecting system is so composed as to use the IC-RAM card as a recording medium and as to detect the approaching to the IC-RAM card electrically and as to interrupt the power supply to the IC-RAM card before the IC-RAM card is pulled off, an operator of the register is able to operate freely at any time without being conscious of the operating state of the IC-RAM card, thereby the operability is improved and the instrument is small-sized.

## Claims

1. A commodity information terminal wherein a removable RAM card is used as main memory of a CPU thereby program to execute commodity register job of the commodity information terminal is previously recorded in said RAM card, and the program can be started and the commodity register job can be carried out by only connectiong the RAM card to the commodity information terminal.

2. A card acceptable commodity information terminal wherein a RAM card is utilized as date file or program file, and the loading timing of said RAM card is automatically detected thereby whether the RAM card is attached normally or not can be diagnosed automatically.

3. A commodity information terminal comprising:

a) a keyboard for inputting information about commodities or commodity trading or means equivalent to the keyboard for inputting the information about commodities or commodity trading;

b) a display for indicating the information inputted by the input means or trading information which is analyzed and processed based on the information;

c) a printer for printing the trading infor mation onto a recording sheet;

d) a CPU for controlling the input means, the display and the printer;

e) a RAM card being removable and capable of performing write/read in the CPU and having mechanism capable of storing and holding the written information;

f) a protection cover covering at least a part of the RAM card; and

g) a sensor for detecting the mounting space of the protection cover, said sensor detecting variation of the mounting state of said protection cover.

4. A commodity information terminal as set forth in claim 3, wherein when the sensor detects variation of the mounting state of the protection cover, the power supply to the RAM card is interrupted and/or at least a part of an interface circuit between the RAM card and the CPU is made high impedance.

5. A commodity information terminal as set forth in claim 3, wherein when the sensor detects variation of the mounting state of the protection cover, the power can be supplied to the RAM card, and the CPU can read data from or write it to the RAM card.

6. A commodity information terminal as set forth in claim 3, wherein when the sensor detects variation of the mounting state of the protection cover, input from said input means is ignored, and after the sensor detects that the protection is returned to the predetermined mounting state, the input form the input means is made effective.

7. A commodity information register as set forth in claim 3, wherein when the sensor detects variation of the mounting state of the protection cover, input from said input means is ignored, and said terminal is provided with means for informing an operator of the state that the input is ignored, and with means for detecting that the protection cover is returned to the predetermined mounting state, for confirming the state that read/write can be performed to the RAM card, and for informing an operator of the state.

0 265 894

# FIG. 1

CPU — 40

ROM — 50

RAM — 80

FDD CONTROL UNIT — 90

102

10    20    30

# FIG. 8

180°

B

90°

A                    C

11

# FIG. 2

FIG. 3A

33
31
32
34
35

FIG. 3B

CPU

36

DATA
WRITE/READ
CIRCUIT

37

38

41

39

34

PUSH
BUTTON

35    42    40

43

# FIG. 4

CPU — 40

ROM — 50

IC-RAM CARD CONTROL UNIT — 60

IC-RAM CARD — 70

10          20          30

# FIG. 5

101
IC-RAM CARD DETECTING CIRCUIT

120
CONNECTOR

70
IC-RAM CARD

130
CPU BUS

110
IC-RAM CARD POWER SOURCE

# FIG. 6

```
        ┌─────────────────────┐
        │   PROGRAM IN ROM     │
        └─────────────────────┘
                   │
        ┌─────────────────────┐
        │  INHIBIT INTERRUPT   │────── 21
        └─────────────────────┘
                   │
                   ▼
        ┌─────────────────────┐
        │  READ INFORMATION    │
        │  OF IC-RAM CARD      │────── 22
        │  INSERTED            │
        └─────────────────────┘
                   │
            ◇─────────────◇
      NO   ╱               ╲        23
    ←──────   INSERTED ?     ─────
            ╲               ╱
            ◇─────────────◇
                   │ YES
        ┌─────────────────────┐
        │  SUPPLY POWER        │
        │  TO IC-RAM CARD      │────── 24
        └─────────────────────┘
                   │
        ┌─────────────────────┐
        │       WAIT           │────── 25
        └─────────────────────┘
                   │
        ┌─────────────────────┐
        │  JUMP TO             │
        │  PROGRAM IN          │────── 26
        │  IC-RAM CARD         │
        └─────────────────────┘
```

# FIG. 7

# FIG. 9

100

BAR CODE
INPUT
DEVICE

700

I/O
INTERFACE

200

CPU

500

PROGRAM
MEMORY

300

PRINTER

600

DATA
MEMORY

400

DISPLAY
UNIT

1000

SENSOR

IC-RAM
CARD
INTERFACE

800

IC-RAM
CARD

900

FIG. 1O

START

OPEN IC-RAM
CARD COVER

EXCHANGE CARDS

CLOSE IC-RAM
CARD COVER

EXECUTE DIAGNOSIS
OF IC-RAM CARD

DIAGNOSIS RESULTS
OK?

YES

NO

MESSAGE WRONG
LOADING OF IC-
RAM CARD

END

# FIG. 11

# FIG. 12

## FIG. 13 A

# FIG. 13 B

FIG. 14A

FIG. 14B

# FIG. 14 C

201

PROTECTION COVER
AT NORMAL POSITION
?

YES

NORMAL

NO   VARIATION

INTERRUPT POWER SUPPLY
TO IC-RAM CARD          202

203

PROCESSING OF
INFORMATION ABOUT
COMMODITIES AND
COMMODITY TRADING

0 265 894

# FIG. 14 D

204

PROTECTIVE COVER AT NORMAL POSITION ? — YES

NO  PROTECTIVE COVER OPEN

FINISH WRITE IF ANY WRITING DATA IN IC-RAM CARD  — 205

INTERRUPT POWER SUPPLY TO IC-RAM CARD  — 206

PROTECTION COVER OPEN

PROTECTION COVER MOUNTED TO NORMAL POSITION ?  — 207

NO

YES  PROTECTION COVER MOUNTED

SUPPLY POWER TO IC-RAM CARD  — 202

203

PROCESSING OF INFORMATION ABOUT COMMODITIES OR COMMODITY TRADING FROM KEYBOARD OR INPUT MEANS

FIG. 14 E

204 PROTECTIVE COVER AT NORMAL POSITION? — **YES** ────────────┐

**NO** | PROTECTIVE COVER OPEN

205 FINISH WRITE IF ANY WRITING DATA IN IC-RAM CARD

206 INTERRUPT POWER SUPPLY TO IC-RAM CARD

207 PROTECTION COVER MOUNTED TO NORMAL POSITION?

PROTECTION COVER OPEN — **NO**

**YES** | PROTECTION COVER MOUNTED

202 SUPPLY POWER TO IC-RAM CARD

208 DISCRIMINATION SYMBOL OF IC-RAM CARD REASONABLE?

**NO**

209 ERROR PROCESSING

**YES**

203 PROCESSING OF INFORMATION ABOUT COMMODITIES OR COMMODITY TRADING FROM KEYBOARD OR INPUT MEANS

FIG. 14 F

PROTECTIVE COVER AT NORMAL POSITION ? — 204

YES → (to 203)

NO → PROTECTIVE COVER OPEN

FINISH WRITE IF ANY WRITING DATA IN IC-RAM CARD — 205

INFORM TO OPERATOR — 210

INTERRUPT POWER SUPPLY TO IC-RAM CARD — 206

PROTECTION COVER MOUNTED TO NORMAL POSITION ? — 207

NO → PROTECTION COVER OPEN

YES | PROTECTION COVER MOUNTED

SUPPLY POWER TO IC-RAM CARD — 202

DISCRIMINATION SYMBOL OF IC-RAM CARD REASONABLE ? — 208

NO → ERROR PROCESSING — 209

YES — 211

INFORM TO OPERATOR

PROCESSING OF INFORMATION ABOUT COMMODITIES OR COMMODITY TRADING FROM KEYBOARD OR INPUT MEANS — 203

# FIG. 15

$t$ (TIME LAPSE)

(1) PROTECTION COVER START OPENING

(2) CPU TIMER

(3) CPU DETECTS PROTECTION COVER

BLOCK1  BLOCK2  BLOCK3  BLOCK4

(4) READY FOR DATA WRITE TO IC-RAM CARD (4 BLOCK DATA)

(5) FINISH WRITE OF WRITING DATA BLOCK

(6) STOP POWER SUPPLY TO IC-RAM CARD

(7) TIME TO CONTACT WITH IC-RAM CARD AFTER OPENING OF PROTECTION COVER

$t_1$    $t_2$  $t_3$ $t_4$    $t_5$    $t_4 - t_1 \ll t_5 - t_1$

0 265 894